# EUROPÄISCHE PATENTSCHRIFT

(11) **EP 3 694 671 B1**
(45) Veröffentlichungstag und Bekanntmachung des Hinweises auf die Patenterteilung: **01.12.2021**
(21) Anmeldenummer: 18796585.0
(22) Anmeldetag: 08.10.2018
(51) Int. Cl.: B23K 9/12, B23K 9/173, B23K 9/26, B23K 9/29

(54) **KONTAKTDÜSE FÜR DAS LICHTBOGENSCHWEISSEN MIT EINER IM QUERSCHNITT DIE FORM EINES STERNFÖRMIGEN INNENVIELRUNDES MIT KONVEX GERUNDETEN SEITEN AUFWEISENDEN KANAL**
CONTACT TIP FOR ARC WELDING WITH A CHANNEL HAVING A STELLATE, MULTI-LOBULAR CROSS-SECTION WITH CONVEXLY ROUNDED SIDES
BUSE DE CONTACT POUR LE SOUDAGE À L'ARC POURVUE D'UN CANAL PRÉSENTANT EN SECTION TRANSVERSALE LA FORME D'UNE TÊTE RONDE EN FORME D'ÉTOILE À EMPREINTES MULTIPLES POURVUE DE FACES ARRONDIES DE MANIÈRE CONVEXE

(30) Priorität: 12.10.2017 DE 102017123749
(43) Veröffentlichungstag der Anmeldung: 19.08.2020
(73) Patentinhaber: KME Special Products GmbH & Co. KG, 49074 Osnabrück (DE)
(72) Erfinder: HUNE, Carsten, 49134 Wallenhorst (DE); SCHÖNFELD, Jörg, 49479 Ibbenbüren (DE); BÖERT, Frank, 49134 Wallenhorst (DE); HINTEMANN, Reinhard, 49086 Osnabrück (DE); WOBKER, Hans-Günter, 49565 Bramsche (DE); MEYER, Stephan, 49448 Stemshorn (DE)
(74) Vertreter: Griepenstroh, Jörg
(86) Internationale Anmeldenummer: PCT/DE2018/100832
(87) Internationale Veröffentlichungsnummer: WO 2019/072338

(56) Entgegenhaltungen:
- WO-A2-2010/035964
- CN-U- 202 667 892
- DE-A1- 2 306 376
- DE-A1-102004 008 058
- US-A- 3 240 233

## Beschreibung

Die Erfindung betrifft eine Kontaktdüse für das Lichtbogenschweißen gemäß den Merkmalen im Oberbegriff des Patentanspruchs 1.

Die DE 10 2004 008 058 A1 offenbart eine Stromdüse für Schweiß- und Schneidbrenner mit einem geraden Drahtführungskanal zur Führung einer Drahtelektrode. Sie weist ein 5-Kant-Profil auf. Es soll eine linienförmige Kontaktierung des runden Schweißdrahtes an mindestens zwei Flächen des 5-Kant-Profiles gewährleistet sein, wobei die Strombelastung des Schweißdrahtes niedriger und die erreichte Querschnittsfläche größer ist als die vergleichbare Querschnittsfläche eines runden Querschnitts. Die größere Querschnittsfläche soll mechanische Verstopfungen der Innenbohrung verhindern, die den Drahttransport erschweren können.

Zum Stand der Technik ist die CN 202 667 892 U (Basis für den Oberbegriff des Anspruchs 1) zu nennen, die eine Kontaktdüse für das Lichtbogenschweißen mit wenigstens einem die Kontaktdüse durchlaufenden Kanal zur Aufnahme eines Schweißdrahtes aufweist, wobei der Kanal einen unrunden Querschnitt besitzt und im Querschnitt die Form eines sternförmigen Innenvielrundes mit konvex gerundeten Seiten hat. Die Grundform des Kanals ist ein Polygon mit fünf Ecken, innerhalb dessen sich der Kanal befindet. Die konvex gerundeten Seiten sind im Querschnitt Kreisbögen.

Die DE 23 06 376 A1 offenbart ebenfalls eine solche Kontaktdüse, wobei die Seiten jedoch nicht komplett gerundet sind, sondern als großflächige Rippen gestaltet sind. Die Rippen habe einen etwa U-förmigen Querschnitt mit einem mittleren Bogenabschnitt und sich anschließenden geraden Abschnitten.

Die WO 2010/035946 A2 offenbart ebenfalls eine Schweißspitze bzw. Kontaktdüse mit einem inneren Querschnitt zur Aufnahme eines Schweißdrahts.

Die US 3 240 233 A beschreibt eine Drahtführungseinrichtung, wobei der Querschnitt des von dem Draht durchlaufenden Kanals vieleckförmig ist, beispielsweise quadratisch, sternförmig oder als Innenvielrund ausgestaltet ist.

Hiervon ausgehend liegt der Erfindung die Aufgabe zugrunde die Kontaktdüse dahingehend weiterzuentwickeln, dass das Verstopfungsrisiko noch weiter reduziert wird ohne dass die Strombelastung steigt.

Diese Aufgabe ist bei einer Kontaktdüse mit den Merkmalen des Patentanspruchs 1 gelöst.

Die Unteransprüche betreffen vorteilhafte Weiterbildungen der Erfindung.

Die erfindungsgemäße Kontaktdüse für das Lichtbogenschweißen besitzt wenigstens einen die Kontaktdüse in Längsrichtung durchlaufenden Kanal. Er dient zur Aufnahme eines Schweißdrahtes, der über den Kontakt mit der Kontaktdüse mit Strom versorgt wird. Der Kanal besitzt einen unrunden Querschnitt. Im Rahmen der Erfindung ist vorgesehen, dass der Kanal im Querschnitt die Form eines sternförmigen Innenvielrundes mit konvex gerundeten Seiten hat. Die konvex gerundeten Seiten beziehen sich auf die Kontur der Seiten im Querschnitt des Kanals und nicht im Längsschnitt des Kanals. In Längsrichtung betrachtet kann der Kanal sich trichterförmig zu seinem Austrittsende verjüngen. Bevorzugt bleibt der Querschnitt gleich. Der Kanal kann gerade oder gekrümmt sein. Im Querschnitt besitzt er jedoch mindestens einen Längenabschnitt mit konvex gerundeten Seiten.

Das sternförmige Innenvielrund basiert darauf, dass der Kanal bevorzugt eine ungerade Mehrzahl gerundeter Seiten hat, insbesondere 3, 5, 7, ... Seiten. Vorzugsweise besitzt das Innenvielrund 5 Seiten.

Alternativ ist die Anzahl der Seiten gerade, wobei vorzugsweise 6 oder mehr Seiten vorhanden sind.

Vorzugsweise besitzen alle Seiten die gleiche Länge und Form, so dass es sich um ein drehsymmetrisches Querschnittsprofil handelt, bei welchem benachbarte Seiten durch Rotation auf sich selbst abbildbar sind. Die Drehsymmetrie erleichtert die Fertigung. Sie führt zu einer gleichmäßigen Belastung von Fertigungswerkzeugen zur Herstellung einer solchen Kontaktdüse, insbesondere, wenn diese im Ziehverfahren oder Strangpressverfahren hergestellt werden.

Die konvex gerundeten Seiten sind im Querschnitt teilweise Kreisbögen. Insbesondere besitzen alle Kreisbögen einen im Rahmen der Fertigungstoleranzen annähernd gleichen Radius.

Die Grundform des Kanals ist ein Polygon mit mindestens drei Seiten, vorzugsweise mit fünf oder mehr Seiten. Das Polygon ist gleichmäßig und mithin ein Dreieck, Fünfeck oder ein entsprechendes Vieleck. Innerhalb des Polygons befindet sich vollständig der Kanal. Aufgrund der konvex gerundeten Seiten füllt Querschnitt des Kanals das Polygon nicht vollständig aus. Die Querschnittsfläche des Kanals ist daher kleiner als die Querschnittsfläche des Polygons.

Die konvex gerundeten Seiten sollen nicht zu stark gekrümmt sein. Insbesondere ist der Radius der Kreisbögen so groß, dass der Mittelpunkt der Kreisbögen radial außerhalb des Polygons liegt.

Dadurch werden relativ tiefe Ecken geschaffen, die bis in den Eckbereich des Polygons ragen können. Somit bleibt in dem Kanal viel Platz, Verschmutzungen und Anhaftungen aufzunehmen. Der Radius der Kreisbögen bzw. die gesamten Abmessungen des Polygons und des Kanals orientieren sich maßgeblich an dem Durchmesser des Schweißdrahtes. Im Rahmen der Erfindung wird davon ausgegangen, dass der Schweißdraht einen kreisrunden Querschnitt besitzt.

Die Kreisbögen haben eine Länge, die vorzugsweise mindesten 50 % der Länge einer Seite des Polygons beträgt, vorzugsweise mindestens 70 % und vorzugsweise mindestens 90 %.

Der Radius liegt vorzugsweise in einem Bereich von 0,5 bis 4 mm. Das ist auch der Bereich der Dicken typischer Schweißdrähte, die mit einer solchen Kontaktdüse geführt werden. Ein Innendurchmesser eines Innenkreises der Kontaktdüse muss größer als der Drahtdurchmesser sein. Vorzugsweise ist der Innendurchmesser etwa 15 bis 20% größer als der Drahtdurchmesser.

Der Begriff "sternförmig" bedeutet, dass es in den Eckbereichen sich nach radial außen hin verjüngende Taschen gibt. Die Taschen liegen im Bereich der Ecken des Polygons. Sie müssen sich nicht zwingend bis zur äußeren Ecke des Polygons erstrecken. Die Taschen können auch gerundet sein. Das Polygon wird im Wesentlichen durch die Verläufe der konvex gerundeten Seiten und die fiktiven Schnittpunkte der konvex gerundeten Seiten bestimmt. Sternförmig bedeutet in diesem Zusammenhang nicht, dass der Querschnitt des Kanals in irgendeiner Weise kreisförmig ist, sondern gezielt in den Eckbereichen Verjüngungen aufweist, die durch die konvex gerundeten Seiten betont werden und sich nach radial innen erweitern und nach radial außen verkleinern.

Durch die vielfach gerundete Innengeometrie der Kontaktdüse ergeben sich mehrfache Kontakte zwischen dem zu führenden Schweißdraht und der Innenseite der Kontaktdüse, d.h. mit seinen gerundeten Seiten. Es sind im Regelfall immer zwei Seiten des Innenvielrundes in Kontakt mit dem Schweißdraht. Die konvexe Gestaltung des Innenvielrundes führt dazu, dass ein im Durchmesser kleinerer Schweißdraht sich immer zu einer Ecke des Innenvielrundes bewegt. Das heißt, er bewegt sich wegen des kleineren Durchmessers weg von der Engstelle, hin zu der benachbarten, ebenfalls gerundeten Seite, bis er auch an der zweiten Seite anliegt. In der Ecke zwischen diesen beiden Seiten wird er geführt. Im Unterschied zu fünfeckigen Querschnitten, bei denen ein im Durchmesser grundsätzlich kleinerer Draht zwischen der benachbarten linken und der benachbarten rechten Seitenfläche auf einer geraden Seitenfläche pendeln kann, wobei es in diesen Momenten des Pendelns zu einer Reduzierung der Kontaktfläche auf nur eine einzige Seite kommt, neigt der Schweißdraht bei konvex gerundeten Seiten weniger dazu, zu pendeln und wird stärker in einer Ecke des Innenvielrundes gehalten. Das ist darauf zurückzuführen, dass der Draht sich auf der konvexen Fläche in einer instabilen Position befinden würde und stärker dazu tendiert, in eine stabile Position zukommen. Dieser Effekt ist auch auf die unterschiedlichen Durchmesser des Innenkreises und des Schweißdrahtes zurückzuführen. Der Innenkreis des Innenvielrundes, das heißt der von den Seitenflächen begrenzte Kreisquerschnitt, ist circa 15 bis 20% größer als der Durchmesser des Schweißdrahtes, der durch das Innenvielrund geführt wird. Tatsächlich hat der Schweißdraht innerhalb des Kanals mehr Platz, weil er sich überwiegend zwischen den gerundeten Seiten befindet, das heißt innerhalb der Ecken verläuft. Dem Bereich der Ecken kommt daher auch eine ganz besondere Bedeutung zu.

Keinesfalls darf es im Eckbereich zu einer Klemmung kommen. Die Ecken weisen erfindungsgemäß eine Tiefe auf, die es ermöglicht, Verschmutzungen zunächst aufzunehmen und dann auch durch die Bewegung des Schweißdrahtes aus dem Kanal herauszuführen. Es kommt dabei weniger darauf an, dass die Ecken einen bestimmten Querschnitt aufweisen. Wichtiger ist, dass eine hinreichend große Querschnittsfläche in den Ecken vorhanden ist.

Die konvex gerundeten Seiten besitzen, gemäß der Erfindung, einen mittleren Bereich und sich an den mittleren Bereich anschließende Randbereiche, wobei die mittleren Bereiche konvex gerundet sind und die Randbereiche als Geraden ausgeführt sind. In diesem Fall ist nicht die gesamte Seite kurvenförmig, sondern lediglich ihr mittlerer Bereich. An die Kurve schließen sich Geraden in Form von Tangenten an, so dass es einen stetigen Übergang zwischen dem mittleren Bereich und den Randbereichen gibt. Die Geraden im Eckbereich bewirken, dass die Ecken dreieckig, trichterförmig und sogar relativ tief ausgeführt sein können.

Die mittleren Bereiche der Seiten sind bevorzugt so breit gestaltet, dass der Schweißdraht immer mit den mittleren Bereichen in Kontakt kommt, das heißt mit den gerundeten Bereichen der Seiten. Der Radius der gerundeten Seiten, bzw. der gerundeten Bereiche der Seite ist bevorzugt größer als der Radius des von den Seiten begrenzten Innenkreises. Daher ist der Radius der gerundeten Seiten auch größer als der Radius des Schweißdrahtes.

Der Begriff einer "konvex gerundeten Seite" ist mithin auch so zu verstehen, dass nur ein Teilbereich einer Seite konvex gerundet ist und wenigstens ein weiterer Teilbereich aus Geraden oder Geradenabschnitten gebildet sein kann. Vorzugsweise ist der überwiegende Teilbereich konvex gerundet.

Um zu verhindern, dass sich in den Ecken Verschmutzungen festsetzen, kann vorgesehen sein, dass die zwischen zwei benachbarten Seiten des Innenvielrundes angeordneten Taschen in ihrem Tiefsten gerundet sind. Der Begriff Innenvielrund bedeutet nicht, dass die gesamte Wandung des Kanals im Querschnitt gerundet sein muss. Es ist ausreichend, wenn der Kanal mehrere Seiten mit Rundungen besitzt, wobei nicht zwingend jede Seite vollständig gerundet sein muss.

Aufgrund des mehrfach konvex gerundeten Verlaufs gibt es Ecken, in denen Taschen ausgebildet sind, die eine radial größere Tiefe haben als die mittleren Bereiche der konvex gerundeten Seiten. Das ist gewünscht. Die Taschen in Kombination mit den konvex gerundeten Seiten bewirken eine Vergrößerung des Eckbereichs, so dass Verschmutzungen effektiver aus der Kontaktdüse abtransportiert werden können. Es kommt bei weniger Verschmutzungen gleichzeitig zu einem verbesserten Kontakt zwischen dem Schweißdraht und den konvex gerundeten Seiten.

Vorzugsweise wird die erfindungsgemäße Kontaktdüse im Strangpressverfahren und/oder durch ein Ziehverfahren, das heißt als Ziehprofil, hergestellt. Beim Ziehen wird ein Hohlprofil über einen Dorn gezogen, um die gewünschte Innenkontur des Kanals herzustellen. Das Ziehen kann in einer oder mehreren Ziehstufen in fortschreitender Annäherung an die Endkontur erfolgen.

Die Kontaktdüse besteht vorzugsweise aus Kupfer oder einer Kupferlegierung. Es wird als günstig angesehen, wenn die Kontaktdüse aus einem kaltgezogenen Werkstoff hergestellt ist, vorzugsweise aus CuCrZr bei einer Härte von 155 bis 190 HBW. In einem weiteren vorteilhaften Ausführungsbeispiel besteht die Kontaktdüse aus einem Verbundwerkstoff. Die Düse kann innenseitig aus CuCrZr oder CuCoBe hergestellt sein. Außenseitig besteht die Düse aus einer abweichenden Kupferlegierung oder aus Kupfer.

Die Erfindung vereinigt die Vorteile einer verbesserten Führung und Kontaktierung des Schweißdrahtes mit den Vorteilen einer verbesserten Aufnahmemöglichkeit für Verschmutzungen. Im Ergebnis wird der Kontakt zwischen Draht und Kontaktdüse gegenüber linear geraden Polygonzügen verbessert und die Betriebssicherheit erhöht.

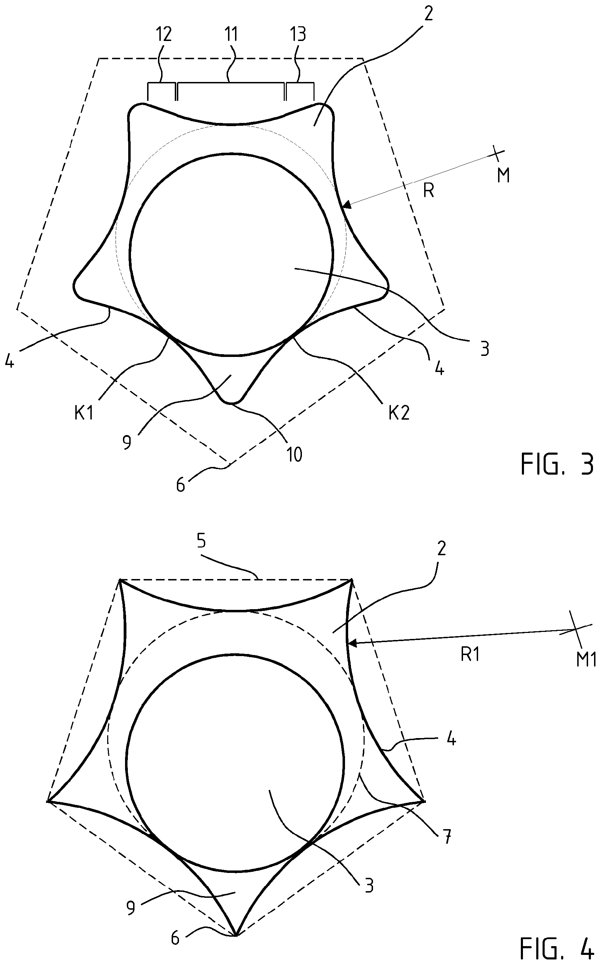

Die Erfindung wird nachfolgend anhand des in Figur 3 schematisch dargestellten Ausführungsbeispiels näher erläutert. Die weiteren Figuren sind nicht Gegenstand der Erfindung. Sie dienen zur Illustration des Erfindungsgedankens. Es zeigen:
- Figur 1: einen Querschnitt durch eine Kontaktdüse für das Lichtbogenschweißen in vergrößerter Darstellung;
- Figur 2: in vergrößerter Darstellung den zentralen Kanal der Figur 1 im Querschnitt;
- Figur 3: eine erfindungsgemäße Ausführungsform des Kanals im Querschnitt;
- Figur 4: einen Kanal im Querschnitt und
- Figur 5: einen Kanal im Querschnitt.

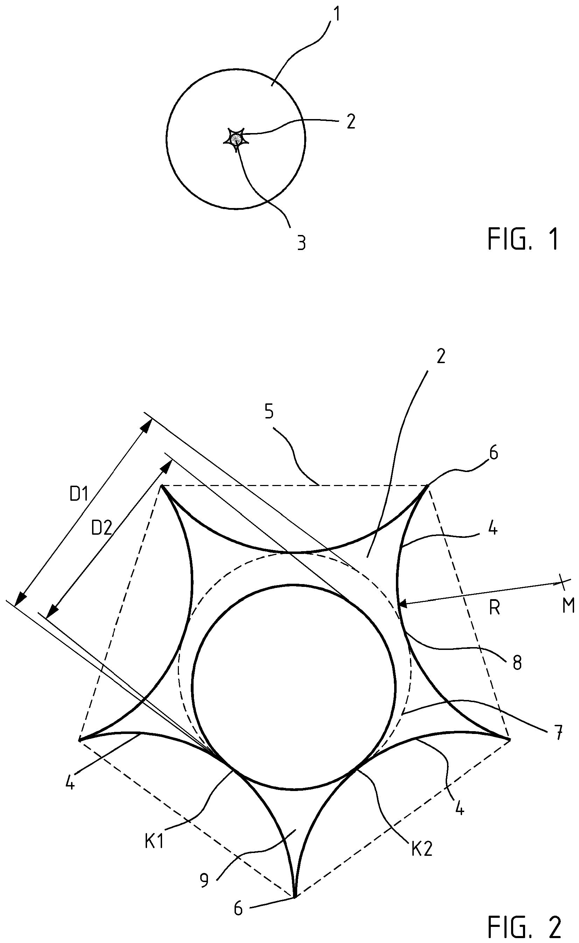

Figur 1 zeigt in vergrößerter Darstellung eine Kontaktdüse für das Lichtbogenschweißen in einer Querschnittdarstellung. Die Kontaktdüse 1 besitzt außen einen zylindrischen Querschnitt und zentral einen in Längsrichtung des Zylinders durchlaufenden Kanal 2 zur Aufnahme eines Schweißdrahtes 3. Bei der Erfindung geht es maßgeblich um die Gestaltung des Kanals 2. Er ist in den nachfolgenden Figuren stark vergrößert dargestellt.

Figur 2 (nicht erfindungsgemäß) zeigt, dass der Kanal 2 keinen kreisrunden Querschnitt hat, sondern die Form eines sternförmigen Innenvielrundes mit konvex gerundeten Seiten 4. Die Grundform des Kanals 2 ist ein fünfeckiges Polygon 5, das mit gestrichelter Hilfslinie eingezeichnet ist. Innerhalb des Polygons 5 befindet sich der Kanal 2. Die jeweils für sich genommen konvex gerundeten Seiten 4 sind alle identisch konfiguriert. Sie sind von Kreisbögen gebildet, die einen annähernd identischen Radius R haben. Die Mittelpunkte M der jeweiligen Kreisbögen mit dem Radius R befinden sich radial außerhalb des Polygons 5. In diesem Ausführungsbeispiel ist der Radius R so gewählt, dass die Seiten 4 sich jeweils exakt in einem Eckpunkt 6 des Polygons 5 bzw. des Kanals 2 treffen, ohne sich vorher zu schneiden. Dadurch wird ein Innenkreis 7 begrenzt, der die fünf im Wesentlichen identisch konfigurierten Seiten 4 an innersten Punkten 8 der Seiten 4 berührt. Er besitzt einen Durchmesser D1. Innerhalb des Kanals 2 befindet sich ein Schweißdraht 3 mit dem kleineren Durchmesser D2. Der Durchmesser D1 des Innenkreises 7 ist ca. 15 bis 20% größer als der Durchmesser D2 des Schweißdrahtes 3.

Der Schweißdraht 3 liegt an den in der Bildebene unteren beiden Seiten 4 auf. Es findet eine Linienberührung an den Kontaktpunkten K1 und K2 statt. Da der Durchmesser D2 des Schweißdrahtes 3 kleiner ist als der Durchmesser D1 des Innenkreises 7 kann der Schweißdraht 3 verschiedene Positionen einnehmen, wird aber immer in eine der Ecken 6 gedrängt.

Aufgrund der konvex geformten Seitenwände 4 befindet sich benachbart jeder Ecke 6 eine Tasche 9, die trichterförmig zuläuft. Diese Tasche 9 ist verhältnismäßig tief und ermöglicht die Aufnahme von Abrieb und Verschmutzungen. Der sternförmige Kanal 2 kann daher in seinen fünf Taschen 9 verhältnismäßig viele Verschmutzungen aufnehmen, ohne dass die Bewegung des Schweißdrahtes 3 in Längsrichtung behindert wird. Fertigungstechnisch ist die Produktion derartiger Taschen 9 durch Umformverfahren möglich.

Die Taschen 9 müssen nicht zwingend bis zu den äußeren Eckpunkten 6 des umschriebenen Polygons 5 reichen. Figur 3 zeigt ein Ausführungsbeispiel, bei welchem der Radius R der konvexen Seite 4 identisch zu dem Ausführungsbeispiel der Figur 1 gewählt ist. Die Taschen 9 sind jedoch nicht spitz, sondern an ihren zu den Ecken 6 des Polygons 5 weisenden Tiefsten 10 gerundet. Das Volumen der Taschen 9 wird dadurch geringfügig kleiner, allerdings ist die Fertigung einfacher. Zudem werden Spannungsspitzen in den sehr spitz ausgeführten Taschen der Figur 2 vermieden. Ein solches Innenvielrund weist aufgrund des Radius R ebenfalls konvex gerundete Seiten 4 auf. Bei dieser Ausführungsform ist die konvexe Form jedoch zusätzlich durch Geraden ergänzt. Jede Seite 4 besitzt einen mittleren Bereich 11, der entsprechend dem Radius R als Kreisbogen gestaltet ist. An den mittleren Bereich 11 schließen sich annähernd gleiche Randbereiche 12, 13 an, die als tangentiale Geraden ausgeführt sind. Die Randbereiche 12, 13 sind, gemäß der Erfindung, jeweils kürzer als der mittlere Bereich 11. Die Kombination aus kurvenförmig gerundeten mittleren Bereichen 11 und geraden Randbereichen 12, 13 ändert nichts an der Funktion der Taschen 9. Allerdings ist die Gestaltung der Taschen 9 geometrisch einfacher. Figur 3 zeigt ferner, dass die Kontaktpunkte K1, K2 des Schweißdrahtes 3 an den Seiten 4 nicht im Bereich der Geraden liegen, sondern im jeweiligen mittleren Bereich 11, so dass sich der Schweißdraht 3 in seiner Bewegung innerhalb des Kanals 2 genauso positioniert, wie bei dem Ausführungsbeispiel der Figur 2.

Figur 4 (nicht erfindungsgemäß) zeigt eine Abwandlung eines Kanals 2, bei welchem die Seiten 4 mit einem größeren Radius R1 gefertigt sind. Der Mittelpunkt M1 befindet sich noch weiter radial außerhalb des Polygons 5. Die Krümmung der Seiten 4 ist dadurch weniger stark. Der Innenkreis 7 wird etwas größer, so dass der Schweißdraht 3 weiter in Richtung der Ecken 6 des sternförmigen Polygons 5 verlagert werden kann. Insgesamt ist dadurch die Querschnittsfläche des Kanals 2 größer. Die Taschen 9 sind dadurch etwas weniger tief, dafür aber breiter. Absolut gesehen ist die Querschnittsfläche einer Tasche 9 dadurch nicht kleiner, sondern kann ähnlich groß eingestellt werden, wie bei einem kleiner gewählten Radius R einer Seite 4.

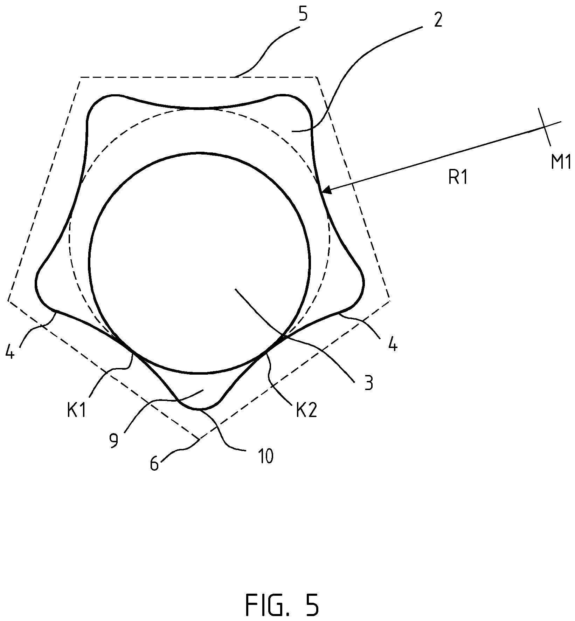

Figur 5 (nicht erfindungsgemäß) zeigt in Analogie zu Figur 3 das Ausführungsbeispiel der Figur 4 mit gerundeten Taschen 9. Es ist zu erkennen, dass auch hier die Querschnittsfläche der Taschen 9 nur minimal verkleinert wird, allerdings das sternförmige Innenvielrund insgesamt weichere Konturen besitzt, so dass weniger Spannungsspitzen innerhalb der Taschen 9, insbesondere im Bereich der Tiefsten 10 des Kanals 2 bzw. des umschreibenden Polygons 5 vorhanden sind. Ein solcher Kanal 2 ist insbesondere im Ziehverfahren einfacher herzustellen als Kanäle 2 mit sehr spitzen Ecken 6 und sehr tiefen Taschen 9. Wie auch beim Ausführungsbeispiel der Figur 3 ändert sich durch die Abrundung der Spitzen der Taschen 9 nichts an dem Anlageverhalten des Schweißdrahtes 3 an den Seiten 4. Er wird nach wie vor in Linienberührung über die Kontaktpunkte K1, K2 innerhalb des Kanals 2 geführt.

### Bezugszeichen:

- 1 -: Kontaktdüse
- 2 -: Kanal
- 3 -: Schweißdraht
- 4 -: Seite
- 5 -: Polygon
- 6 -: Ecke
- 7 -: Innenkreis
- 8 -: Innerster Punkt von 4
- 9 -: Tasche
- 10 -: Tiefstes von 9
- 11 -: Mittlerer Bereich von 4
- 12 -: Randbereich von 4
- 13 -: Randbereich von 4

- D1: - Durchmesser von 7
- D2: - Durchmesser von 3
- K1: - Kontaktpunkt
- K2: - Kontaktpunkt
- M: - Mittelpunkt zu R
- M1: - Mittelpunkt zu R1
- R: - Radius
- R1: - Radius

## Patentansprüche

1. Kontaktdüse für das Lichtbogenschweißen mit wenigstens einem die Kontaktdüse (1) durchlaufenden Kanal (2) zur Aufnahme eine Schweißdrahtes (3), wobei der Kanal (2) einen unrunden Querschnitt besitzt, wobei der Kanal (1) im Querschnitt die Form eines sternförmigen Innenvielrundes mit konvex gerundeten Seiten (4) hat, wobei die Grundform des Kanals (2) ein Polygon mit mindestens 3 Ecken ist, innerhalb dessen sich der Kanal (2) befindet, wobei die konvex gerundeten Seiten (4) im Querschnitt zumindest teilweise Kreisbögen mit einem Radius (R, R1) sind,
**dadurch gekennzeichnet, dass** die konvex gerundeten Seiten (4) einen mittleren Bereich (11) und sich an den mittleren Bereich (11) anschließende Randbereiche (12, 13) besitzen, wobei die mittleren Bereiche (11) konvex gerundet sind und die Randbereiche (12, 13) als Geraden ausgeführt sind, wobei sich die Randbereiche (12, 13) tangential an den mittleren Bereich (11) anschließen,
wobei sich die Mittelpunkte (M) der Kreisbögen außerhalb des Polygons befinden, wobei die Randbereiche (12,13) jeweils kürzer als der mittlere Bereich (11) sind.

2. Kontaktdüse nach Anspruch 1, **dadurch gekennzeichnet, dass** das Innenvielrund eine ungerade Mehrzahl von mindestens 5 gerundeten Seiten (4) hat.

3. Kontaktdüse nach Anspruch 1 oder 2, **dadurch gekennzeichnet, dass** das die Kreisbögen einen im Rahmen der Fertigungstoleranzen im Wesentlichen identischen Radius (R, R1) haben.

4. Kontaktdüse nach einem der Ansprüche 1 bis 3, **dadurch gekennzeichnet, dass** der Radius (R, R1) in einem Bereich von 0,5 bis 4 mm liegt.

5. Kontaktdüse nach einem der Ansprüche 1 bis 4, **dadurch gekennzeichnet, dass** das Innenvielrund mit seinen radial innersten Punkten (8) der gerundeten Seiten (4) einen Innenkreis (7) begrenzt, dessen Durchmesser (D1) 15 bis 20% größer bemessen ist als der Durchmesser (D2) des zu führenden Schweißdrahtes (3).

6. Kontaktdüse nach einem der Ansprüche 1 bis 5, **dadurch gekennzeichnet, dass** der Radius (R, R1) der Kreisbögen größer ist als der Radius des Innkreises (7).

7. Kontaktdüse nach einem der Ansprüche 1 bis 6, **dadurch gekennzeichnet, dass** zwischen benachbarten Seiten (4) des Innenvielrundes Taschen (9) angeordnet sind, die in ihrem Tiefsten (10) gerundet sind.

8. Kontaktdüse nach einem der Ansprüche 1 bis 7, **dadurch gekennzeichnet, dass** es sich um ein Strangpressprofil oder Ziehprofil handelt.

9. Kontaktdüse nach einem der Ansprüche 1 bis 8, **dadurch gekennzeichnet, dass** sie aus einem kalt gezogenen Werkstoff besteht.

10. Kontaktdüse nach einem der Ansprüche 1 bis 9, **dadurch gekennzeichnet, dass** sie aus Kupfer oder einer Kupferlegierung besteht.

11. Kontaktdüse nach Anspruch 9 oder 10, **dadurch gekennzeichnet, dass** sie aus CuCrZr besteht und eine Härte von 155 - 190 HBW aufweist.

12. Kontaktdüse nach einem der Ansprüche 1 bis 11, **dadurch gekennzeichnet, dass** sie innenseitig aus CuCrZr oder CuCoBe besteht und außenseitig aus einer abweichenden Kupferlegierung oder aus Kupfer besteht.

## Claims

1. Contact tip for arc welding with at least one channel (2) passing through the contact tip (1) for receiving a welding wire (3), wherein the channel (2) has a non-round cross-section, wherein the channel (1) has a stellate, multi-lobular cross-section with convexly rounded sides (4), wherein the basic shape of the channel (2) is a polygon with at least 3 vertices, within which the channel (2) is located, wherein the convexly rounded sides (4) have an at least partially arced cross-section with a radius (R, R1),
**characterised in that**
the convexly rounded sides (4) have a central region (11) and edge regions (12, 13) adjoining the central region (11), wherein the central regions (11) are convexly rounded and the edge regions (12, 13) are configured as straight lines, wherein the edge regions (12, 13) tangentially adjoin the central region (11),
wherein
the centre points (M) of the arcs are located outside the polygon, wherein the edge regions (12,13) are each shorter than the central region(11).

2. Contact tip according to claim 1, **characterised in that** the multi-lobular profile has an odd number of at least 5 rounded sides (4).

3. Contact tip according to claim 1 or 2, **characterised in that** the arcs have a substantially identical radius (R, R1) within the scope of manufacturing tolerances.

4. Contact tip according to any of claims 1 to 3, **characterised in that** the radius (R, R1) is in a range of 0.5 to 4 mm.

5. Contact tip according to any of claims 1 to 4, **characterised in that** the radially innermost points (8) of the rounded sides (4) of the multi-lobular profile delimit an inner circle (7), the diameter (D1) of which is 15 to 20% greater than the diameter (D2) of the welding wire (3).

6. Contact tip according to any of claims 1 to 5, **characterised in that** the radius (R, R1) of the arcs is greater than the radius of the inner circle (7).

7. Contact tip according to any of claims 1 to 6, **characterised in that** pockets (9), which are rounded at their deepest point (10), are arranged between adjacent sides (4) of the multi-lobular profile.

8. Contact tip according to any of claims 1 to 7, **characterised in that** it is an extruded profile or drawn profile.

9. Contact tip according to any of claims 1 to 8, **characterised in that** it consists of a cold drawn material.

10. Contact tip according to any of claims 1 to 9, **characterised in that** it consists of copper or a copper alloy.

11. Contact tip according to claim 9 or 10, **characterised in that** it consists of CuCrZr and has a hardness of 155 - 190 HBW.

12. Contact tip according to any of claims 1 to 11, **characterised in that** it consists on the inside of CuCrZr or CuCoBe and on the outside of a different copper alloy or copper.

## Revendications

1. Buse de contact pour soudage à l'arc, présentant au moins un canal (2) traversant la buse de contact (1) et destiné à loger un fil à souder (3), dans laquelle le canal (2) possède une section transversale non ronde, dans laquelle le canal (1) présente en section transversale la forme d'une empreinte à plusieurs lobes internes en forme d'étoile pourvue de faces arrondies de manière convexe (4), dans laquelle la forme de base du canal (2) est un polygone avec au moins 3 coins, dans lequel le canal (2) est situé, dans laquelle les faces arrondies de manière convexe (4) sont, en section transversale, au moins partiellement des arcs de cercle de rayon (R, R1),
**caractérisée en ce que**,
les faces arrondies de manière convexe (4) possèdent une zone centrale (11) et des zones de bord (12, 13) qui se raccordent à la zone centrale (11), dans laquelle les zones centrales (11) sont arrondies de manière convexe et les zones de bord (12, 13) sont réalisées sous forme de lignes droites, dans laquelle les zones de bord (12, 13) se raccordent de manière tangentielle à la zone centrale (11), dans laquelle
les centres (M) des arcs de cercle sont situés à l'extérieur du polygone, dans laquelle les zones de bord (12, 13) sont chacune plus courtes que la zone centrale (11).

2. Buse de contact selon la revendication 1, **caractérisée en ce que** l'empreinte à plusieurs lobes internes présente une pluralité impaire d'au moins 5 faces arrondies (4).

3. Buse de contact selon la revendication 1 ou 2, **caractérisée en ce que** les arcs de cercle présentent un rayon (R, R1) sensiblement identique dans les limites des tolérances de fabrication.

4. Buse de contact selon l'une des revendications 1 à 3, **caractérisée en ce que** le rayon (R, R1) est compris dans une plage de 0,5 à 4 mm.

5. Buse de contact selon l'une quelconque des revendications 1 à 4, **caractérisée en ce que** l'empreinte à plusieurs lobes internes délimite, avec ses points (8) radialement les plus à l'intérieur, un cercle interne (7) dont le diamètre (D1) est supérieur de 15 à 20 % au diamètre (D2) du fil à souder (3) à guider.

6. Buse de contact selon l'une des revendications 1 à 5, **caractérisée en ce que** le rayon (R, R1) des arcs de cercle est supérieur au rayon du cercle interne (7).

7. Buse de contact selon l'une quelconque des revendications 1 à 6, **caractérisée en ce que** des poches (9) sont agencées entre des faces adjacentes (4) de l'empreinte à plusieurs lobes internes, qui sont arrondies au niveau de leur fond (10).

8. Buse de contact selon l'une quelconque des revendications 1 à 7, **caractérisée en ce qu'**il s'agit d'un profilé extrudé ou d'extrusion.

9. Buse de contact selon l'une des revendications 1 à 8, **caractérisée en ce qu'**elle est constituée d'un matériau étiré à froid.

10. Buse de contact selon l'une des revendications 1 à 9, **caractérisée en ce qu'**elle consiste en du cuivre ou un alliage de cuivre.

11. Buse de contact selon la revendication 9 ou 10, **caractérisée en ce qu'**elle consiste en du CuCrZr et présente une dureté de 155 à 190 HBW.

12. Buse de contact selon l'une quelconque des revendications 1 à 11, **caractérisée en ce qu'**elle est consiste en du CuCrZr ou du CuCoBe et **en ce que** son extérieur consiste en un alliage de cuivre différent ou en du cuivre.
